# DEMANDE DE BREVET EUROPEEN

(11) **EP 4 851 739 A1**
(43) Date de publication de la demande: **09.12.2026**
(21) Numéro de dépôt: 25226452.8
(22) Date de dépôt: 22.12.2025
(51) Int. Cl.: G05B 19/418

(54) **MÉTHODE DE CONTRÔLE CONTINU DE LA VITESSE DES MACHINES DE TRAITEMENT DE PRODUITS**

(30) Priorité: 04.06.2025 FR 2505998
(71) Demandeur: Sidel Participations, 76930 Octeville-sur-Mer (FR)
(72) Inventeur: JEROME, Joel, 67116 REICHSTETT (FR)
(74) Mandataire: Sidel Group

(57) **Abrégé**

L'invention vise un procédé de contrôle en continu et en temps réel de la vitesse d'une machine 1 de traitement de produits 2 le long d'une ligne de conditionnement 100, ladite ligne 100 comprenant au moins un dispositif d'accumulation 3 ;
le procédé comprenant au moins les étapes suivantes :
- la réception d'une valeur d'entrée Re indiquant un pourcentage de remplissage R en produits 2 dudit dispositif d'accumulation 3 ;
- le calcul continu d'un point de consigne de vitesse Vc pour la machine 1 de traitement desdits produits 2 entre une vitesse basse Vb et une vitesse haute Vh de traitement de ladite machine 1 de traitement, ledit point de consigne Vc étant basé sur le pourcentage de remplissage R ;
- le filtrage du point de consigne de vitesse Vc pour réduire les amplitudes de variations de vitesse ; et
- l'application du point de consigne de vitesse Vc filtré pour contrôler la vitesse de la machine 1 de traitement.

## Description

### DOMAINE DE L'INVENTION

La présente invention concerne les systèmes de contrôle de vitesse pour les machines de traitement de produits, et plus particulièrement une méthode de contrôle continu de la vitesse des machines de traitement de produits utilisant le pourcentage de remplissage d'un dispositif d'accumulation.

### CONTEXTE

Les systèmes de contrôle de vitesse pour les machines de traitement de produits jouent un rôle crucial dans l'optimisation des lignes de production modernes. Ces systèmes visent à synchroniser le fonctionnement de plusieurs machines sur une ligne de production et de traitement de produits afin de maximiser l'efficacité globale de la ligne tout en maintenant la qualité des produits.

Traditionnellement, sur une ligne d'emballage, le contrôle de la vitesse des machines de traitement de produits repose sur des approches par paliers. Dans ces systèmes, les machines alternent entre des vitesses prédéfinies en fonction de certains seuils. Cette méthode présente cependant des inconvénients, notamment des changements de vitesse brusques pouvant entraîner un stress mécanique sur les composants et affecter la qualité du produit fini.

De plus, de nombreux systèmes conventionnels dépendent fortement des retours d'information des machines en amont pour ajuster leur vitesse. Cette dépendance peut introduire des délais et des complexités dans le contrôle de la ligne, limitant ainsi la flexibilité et la réactivité du système face aux variations de production.

Les dispositifs d'accumulation sont couramment utilisés dans les lignes de conditionnement pour absorber les variations temporaires de production entre les machines. Cependant, l'utilisation efficace de ces dispositifs d'accumulation dans le contrôle de la vitesse reste un défi, en particulier pour obtenir un fonctionnement fluide et continu de la ligne.

Un autre problème rencontré dans les systèmes existants est la difficulté à maintenir une synchronisation précise entre plusieurs machines d'emballage fonctionnant à des vitesses variables. Cela peut entraîner des inefficacités et des goulots d'étranglement dans la production.

Enfin, les méthodes actuelles de contrôle de vitesse ne parviennent pas toujours à réduire efficacement le stress mécanique sur les machines tout en optimisant la production. Cela peut conduire à une usure prématurée des équipements et à des temps d'arrêt non planifiés.

Il a été apprécié qu'un procédé est nécessaire pour surmonter un ou plusieurs de ces problèmes.

### RESUME DE L'INVENTION

Pour ce faire, l'invention concerne un procédé de contrôle en continu et en temps réel de la vitesse d'une machine de traitement de produits le long d'une ligne de conditionnement, dans laquelle la consigne de vitesse de traitement de ladite machine est modifiée en fonction du taux de remplissage d'un dispositif d'accumulation situé le long de la ligne de conditionnement. Plus précisément, l'invention concerne un procédé de contrôle en continu et en temps réel de la vitesse d'une machine de traitement de produits le long d'une ligne de conditionnement, ladite ligne comprenant au moins un dispositif d'accumulation; le procédé comprenant au moins les étapes suivantes :
- la réception d'une valeur d'entrée indiquant un pourcentage de remplissage en produits dudit dispositif d'accumulation ;
- le calcul continu d'un point de consigne de vitesse pour la machine de traitement desdits produits entre une vitesse basse et une vitesse haute de traitement de ladite machine de traitement, ledit point de consigne étant basé sur le pourcentage de remplissage ;
- le filtrage du point de consigne de vitesse pour réduire les amplitudes de variations de vitesse ; et
- l'application du point de consigne de vitesse filtré pour contrôler la vitesse de la machine de traitement.

Dans des modes de réalisation préférés, le dispositif d'accumulation est situé en amont et approvisionne en produits la machine de traitement située en aval.

Selon une caractéristique additionnelle possible, le procédé comprend le prolongement du fonctionnement de la machine de traitement de produits à la vitesse basse jusqu'à ce qu'aucun produit ne soit présent sur le dispositif d'accumulation amont.

Dans des modes de réalisation, la ligne de conditionnement comprend au moins deux machines de traitement, et le dispositif d'accumulation est situé en aval de la première machine de traitement et approvisionne en produits une deuxième machine de traitement située en aval dudit dispositif d'accumulation, le procédé de contrôle s'appliquant à la première machine de traitement.

Selon une caractéristique additionnelle possible, la ligne de conditionnement comprend au moins deux machines de traitement de produits et le point de consigne de vitesse pour une première machine de traitement est calculé indépendamment de la vitesse d'une deuxième machine de traitement en amont ou en aval de ladite première machine le long de la ligne de conditionnement.

Dans des modes de réalisation, la ligne de conditionnement comprend au moins deux machines de traitement de produits et le procédé de contrôle comprend la synchronisation du fonctionnement desdites au moins deux machines de traitement de produits en utilisant le même point de consigne de vitesse calculé pour une seule machine de traitement, de préférence calculé pour la machine de traitement aval au dispositif d'accumulation.

Selon une caractéristique additionnelle possible, le procédé comprend la réduction du stress mécanique de la machine de traitement de produits en appliquant le point de consigne de vitesse filtré.

Dans des modes de réalisation, la vitesse de la machine de traitement est contrôlable de manière analogique.

Selon une caractéristique additionnelle possible, le procédé comprend la mesure en continu du pourcentage de remplissage du dispositif d'accumulation à partir d'un capteur laser.

Dans des modes de réalisation, le procédé de contrôle comprend la prédiction d'un besoin de maintenance basé sur le point de consigne de vitesse appliqué sur la machine de traitement.

Selon une caractéristique additionnelle possible, le procédé de contrôle comprend la surveillance de l'efficacité de la ligne basée sur le point de consigne de vitesse appliqué sur la machine de traitement.

L'invention concerne encore un programme informatique comprenant des instructions qui, lorsqu'elles sont exécutées par un ordinateur, amènent ledit ordinateur à exécuter le procédé tel que décrit précédemment.

L'invention concerne également un support lisible par ordinateur comprenant des instructions qui, lorsqu'elles sont exécutées par un ordinateur, amènent ledit ordinateur à exécuter le procédé tel que décrit précédemment.

L'invention vise enfin une machine de traitement de produits comprenant un processeur et une mémoire, dans laquelle la mémoire comprend des instructions stockées sur celle-ci qui, lorsqu'elles sont exécutées par le processeur, amènent ladite machine à exécuter le procédé de contrôle tel que décrit précédemment.

Dans des modes de réalisation, la machine de traitement de produits est une étiqueteuse.

### BREVE DESCRIPTION DES FIGURES

L'invention sera mieux comprise grâce à la description ci-dessous, qui se base sur des modes de réalisations possibles, expliqués de façon illustrative et nullement limitative, en référence avec les figures annexées, dans lesquelles :
- [Fig. 1] montre des exemples d'adaptation de la vitesse de la machine de traitement en fonction de différents taux de remplissage du dispositif d'accumulation ; et
- [Fig.2] ; montre des courbes de calcul de la vitesse de la machine en fonction du taux de remplissage.

### DESCRIPTION DETAILLEE

La présente invention concerne un procédé de contrôle continu de la vitesse des machines 1 de traitement de produits 2 sur une ligne 100 de conditionnement, procédé qui peut améliorer l'efficacité et la fluidité de ladite ligne 100. Ce procédé utilise le pourcentage de remplissage R d'un dispositif d'accumulation 3 pour calculer en continu un point de consigne de vitesse Vc pour une machine de traitement 1 de produits 2, entre une vitesse basse Vb et une vitesse haute Vh.

Au sens de la présente invention, le terme « produit » englobe un objet individuel. Un tel produit 2 peut-être un récipient, comme une bouteille ou un flacon, ou bien une canette, ou encore une brique cartonnée. Un produit 2 peut être en tout type de matériau, notamment en matériau plastique ou composite, en métal, en carton ou encore en verre. Un produit 2 peut être rigide ou semi-rigide.

Un produit 2 peut présenter tout type de forme, symétrique ou non, régulière ou irrégulière.

Un récipient est destiné à contenir, de façon non exhaustive, un fluide, un liquide, des poudres ou des granulés, notamment de type agroalimentaire ou cosmétique, ou dédié à l'entretien ou à l'hygiène corporelle.

De manière connue, de tels produits 2 sont obtenus le long d'une ligne 100 industrielle de production et/ou de conditionnement, subissant plusieurs traitements successifs en traversant des machines de traitement 1 dédiées, comme par exemple le soufflage de bouteille ou flacon en matériau plastique, le remplissage et le bouchage, l'étiquetage, ou encore la stérilisation ou la pasteurisation. Une fois traités, les produits 2 finis sont groupés au travers d'une étape de conditionnement en lots, en vue de leur manutention et leur transport.

Le long d'une ligne industrielle, les produits 2 sont donc déplacés, généralement selon une direction longitudinale, depuis l'amont vers l'aval, entre les postes ou machines successives de traitement 1, au moyen de convoyeurs adaptés, essentiellement du type à bande sans fin. En outre, lesdits produits é sont traités et convoyés les uns à la suite des autres selon une file ou plusieurs files parallèles entre elles, à savoir selon un flux unifilaire ou plurifilaire.

Généralement, afin d'assurer la production en continu d'une telle ligne industrielle, malgré l'arrêt d'une machine 1 de traitement ou pour des raisons de cadences différentes de traitement entre deux machines 1, on prévoit un ou plusieurs dispositifs d'accumulation 3 desdits produits 2, chaque dispositif d'accumulation 3 assurant le stockage provisoire d'une quantité variable de produits 2 entre une machine 1 de traitement située en amont et une machine 1 de traitement située en aval par rapport audit dispositif d'accumulation 3.

Le procédé selon l'invention vise à adapter de manière continue et en temps réel la vitesse de la machine 1 de traitement aval en fonction du taux de remplissage R du dispositif d'accumulation 3 amont ou aval, de préférence amont.

Il est entendu que le procédé de l'invention s'applique à une machine 1 de traitement en fonctionnement normal, c'est-à-dire en dehors des phases de démarrage ou d'arrêt de la ligne 100.

Les systèmes et méthodes ou procédés décrits ici peuvent être mis en œuvre dans toute forme de dispositif informatique ou électronique. Le terme "ordinateur", tel qu'utilisé dans ce document, englobe tout appareil disposant de capacités de traitement suffisantes pour exécuter des instructions. Cela inclut, sans s'y limiter, les ordinateurs personnels, les serveurs, les appareils mobiles, les assistants numériques personnels et les dispositifs similaires.

Ces appareils peuvent comprendre un ou plusieurs processeurs, tels que des microprocesseurs, des contrôleurs ou d'autres types de processeurs appropriés, capables d'exécuter des instructions pour contrôler le fonctionnement de l'appareil. Par exemple, dans certaines implémentations utilisant une architecture de système sur puce, les processeurs peuvent inclure des blocs à fonction fixe (accélérateurs matériels) qui exécutent des parties de la méthode en matériel plutôt qu'en logiciel ou micrologiciel. Une plateforme logicielle, telle qu'un système d'exploitation ou similaire, peut être installée pour prendre en charge l'exécution de logiciels d'application.

La fonctionnalité décrite peut être implémentée en matériel, en logiciel ou dans toute combinaison de ceux-ci. Lorsqu'elle est mise en œuvre en logiciel, les instructions ou le code peuvent être stockés sur ou transmis via un support lisible par ordinateur. Ces supports comprennent des supports de stockage lisibles par ordinateur, qui peuvent être volatils ou non volatils, amovibles ou non amovibles, et mis en œuvre en utilisant toute technologie pour stocker des informations telles que du code de programme, des structures de données ou d'autres données. Les exemples incluent, sans s'y limiter, la ROM, l'EEPROM, la RAM, le stockage magnétique ou optique, la mémoire flash, ou tout autre support de stockage accessible par un ordinateur. Les supports de communication qui facilitent le transfert de logiciels, tels que les câbles coaxiaux, la fibre optique, la DSL ou les signaux sans fil, peuvent également être considérés comme faisant partie des supports lisibles par ordinateur.

Le procédé selon l'invention comprend une étape de réception d'une valeur d'entrée Re correspondant à un pourcentage de remplissage R en produits 2 du dispositif d'accumulation 3 situé en amont ou en aval, de préférence en amont, de la machine 1 de traitement desdits produits 2. Cette valeur d'entrée Re est mesurée en continu, possiblement par différents moyens.

Dans des modes de réalisation, le pourcentage de remplissage R, transmis sous la forme d'une valeur d'entrée Re, du dispositif d'accumulation 3 peut être obtenu à partir de capteurs tels que des lasers ou des capteurs de position, par exemple situés le long du dispositif 3 d'accumulation.
Il est également envisageable d'utiliser une caméra permettant de surveiller le remplissage du dispositif 3 d'accumulation.

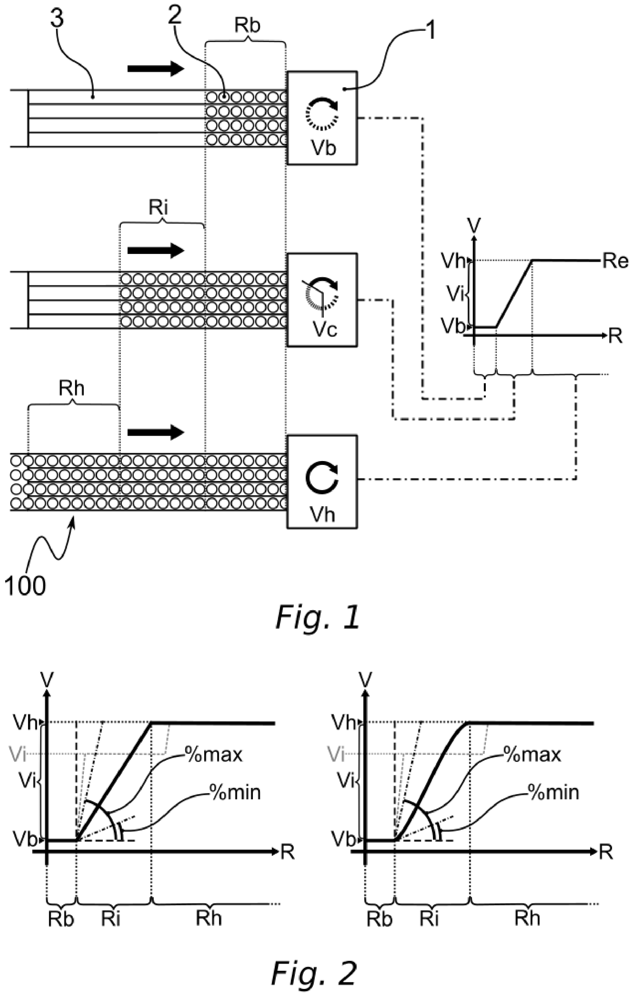

Le procédé comprend également une étape de calcul continu d'un point de consigne de vitesse Vc pour la machine de traitement 1 desdits produits 2 entre une vitesse basse Vb et une vitesse haute Vh de traitement de ladite machine de traitement 1, ledit point de consigne Vc étant basé sur le pourcentage de remplissage R. Comme décrit ci-dessus, cette étape de calcul est par exemple effectuée par un ordinateur ou un processeur d'une unité de contrôle de la ligne 100 de conditionnement. Des exemples de la relation entre la vitesse de la machine 1 de traitement et le taux de remplissage R du dispositif d'accumulation 3 sont visibles en figures 1 et 2. Notamment, cette relation peut être représentée sous la forme d'une courbe en calculant un coefficient de corrélation linéaire entre un pourcentage de remplissage R nul et un pourcentage de remplissage R égal à 100, respectivement entre une vitesse basse Vb et une vitesse haute Vh.
Le fait d'adapter en continu et en temps réel la vitesse de la machine 1 de traitement des produits 2 au pourcentage de remplissage R du dispositif d'accumulation 3 permet avantageusement de suivre les fluctuations de production de la ligne 100. En outre, par exemple en cas de panne en amont, le dispositif d'accumulation 3 va se vider progressivement, et le fait que la machine 1 aval ralentisse en cadence va permettre à la ligne 100 de continuer à fonctionner plus longtemps, et de s'adapter en douceur.

Par vitesse de la machine 1 de traitement, on entend la vitesse à laquelle ladite machine 1 traite les produits 2. Autrement dit, la vitesse de la machine 1 de traitement correspond à sa cadence de traitement. Généralement, la cadence ou vitesse de traitement d'une machine 1 est comprise entre une vitesse basse Vb et une vitesse haute Vh. Par exemple, une machine 1 de traitement de type étiqueteuse est capable de traiter entre 10 000 et 60 000 produits par heure.

On peut voir en figure 1 trois exemples de fonctionnement de la machine 1 de traitement, dans le cas où la machine 1 est située en aval du dispositif d'accumulation 3. En haut de la figure, le taux de remplissage R du dispositif d'accumulation atteint un seuil Rb de remplissage bas. Cela induit un point de consigne de vitesse Vc qui correspond à la vitesse basse Vb de la machine 1 pour le traitement des produits 2.
Lorsque le dispositif 3 d'accumulation se remplit à un taux de remplissage intermédiaire Ri, compris entre le taux bas Rb et le taux haut Rh, le point de consigne de vitesse Vc étant ajusté en conséquence, et tout cela de manière continue. Le point de consigne Vc correspond à une vitesse intermédiaire Vi qui est le point de consigne de vitesse Vc ajusté en temps réel compte tenu du taux de remplissage intermédiaire Ri. La vitesse Vi est comprise entre une vitesse basse Vb et une vitesse haute Vh.
Enfin, lorsque le dispositif 3 d'accumulation arrive à saturation, le taux de remplissage R correspond à un taux de remplissage dit haut, Rh, et le point de consigne de vitesse Vc correspond à la vitesse haute Vh de la machine 1 de traitement de produits 2, afin de vider au plus vite le dispositif d'accumulation 3.
Il est entendu que la figure 1 ne montre qu'un exemple possible, les différents taux Rb et Rh pouvant être inférieurs ou supérieurs à ceux modélisés sur cet exemple de réalisation. Par exemple, le taux Rh peut être inférieur à la saturation totale du dispositif d'accumulation 3.

La figure 2 montre des exemples de variation du point de consigne de vitesse Vc, correspondant à la vitesse Vi de la machine 1, en fonction du taux de remplissage R. On peut voir que la relation entre le taux de remplissage R et la vitesse Vi de la machine peut être ajustée notamment via une pente d'inclinaison, pour que les changements de vitesse ne soient pas trop brusques.

Le procédé selon l'invention comprend également une étape de filtration du point de consigne de vitesse Vc. Cette étape de filtration permet de réduire les amplitudes de variations les micro-variations de vitesse induites par des effets physiques ou électriques externes, liés par exemple une chute de produit, à l'intervention d'un opérateur, à des erreurs de détection, afin que le changement de cadence ne soit pas trop brusque.

Dans des modes de réalisation, l'étape de filtration du point de consigne de vitesse Vc consiste à appliquer une hysteresis sur la courbe de vitesse établissant la corrélation entre la vitesse de la machine et le pourcentage de remplissage R du dispositif d'accumulation 3. En d'autres termes, dans des modes de réalisation, le point de consigne de vitesse Vc ne suit pas la même courbe selon l'augmentation ou la diminution du pourcentage de remplissage R. On applique donc une courbe de croissance de vitesse qui diffère de la courbe de décroissance appliquée pour obtenir le point de consigne de vitesse Vc. Autrement dit, les seuils de remplissage du dispositif d'accumulation 3 ne sont pas les mêmes pour enclencher une accélération ou une décélération de la machine 1 de traitement. Cette approche peut permettre des transitions de vitesse plus douces par rapport aux systèmes par paliers traditionnels, c'est-à-dire d'éviter des pics d'accélération ou de décélération. De plus, le stress mécanique sur les équipements et machines 1 de traitement peut être réduit grâce à l'application de points de consigne de vitesse filtrés.

Le procédé selon l'invention comprend aussi une étape d'application du point de consigne de vitesse Vc filtré pour contrôler la vitesse de la machine 1 de traitement. Par contrôle de la vitesse de la machine 1 de traitement, on entend le pilotage de ladite vitesse. Autrement dit, la vitesse de la machine 1 de traitement correspond au point de consigne de vitesse Vc filtré après mise en œuvre du procédé selon l'invention.

Dans des modes de réalisation, la ligne 100 de conditionnement comprend au moins deux machines 1 de traitement et le calcul du point de consigne de vitesse Vc calculé pour une première machine 1 est indépendant de la vitesse d'une deuxième machine 1 de traitement située en amont ou en aval le long de la ligne 100 de conditionnement. Ainsi, la vitesse de la première machine 1 de traitement de produits 2 est contrôlée sans utiliser de retour de vitesse de la deuxième machine de traitement 1 en amont ou en aval. En d'autres termes, le point de consigne de vitesse Vc, dans des modes de réalisation, ne dépend pas de la vitesse de la deuxième machine 1 de traitement amont ou aval, ce qui peut simplifier le contrôle de la ligne et améliorer sa réactivité.

Selon une caractéristique possible, le point de consigne de vitesse Vc de la machine 1 de traitement dépend uniquement du pourcentage de remplissage R du dispositif d'accumulation 3 amont ou aval, de préférence amont, le long de la ligne 100 de conditionnement.

Dans des modes de réalisation, lorsque le point de consigne de vitesse Vc a atteint la vitesse basse Vb compte tenu du pourcentage de remplissage R du dispositif d'accumulation 3, le procédé comprend en outre une étape de prolongement du fonctionnement de la machine 1 de traitement de produits 2 à la vitesse basse Vb jusqu'à ce qu'aucun produit 2 ne soit présent sur le dispositif d'accumulation 3 amont le long de la ligne 100 de conditionnement. Autrement dit, lorsque le point de consigne de vitesse Vc est égal à la vitesse basse Vb, le procédé applique l'application du point de consigne de vitesse Vc correspondant la vitesse basse Vb, et ceci jusqu'à épuisement des produits 2 stockés sur le dispositif d'accumulation 3. Le fait de prolonger le fonctionnement à basse vitesse jusqu'à ce que le dispositif d'accumulation 3 amont soit vide permet d'optimiser ainsi l'utilisation des ressources.

Dans des modes de réalisation, le procédé comprend la synchronisation du fonctionnement de au moins deux machines 1 de traitement en utilisant le même point de consigne de vitesse Vc calculé. Ce mode de réalisation est particulièrement intéressant dans les cas où chaque machine 1 de traitement n'est pas pourvue d'un dispositif d'accumulation 3 directement en amont.

Selon une caractéristique additionnelle possible, le procédé de contrôle comprend la réduction du stress mécanique sur la machine 1 de traitement de produits 2 en appliquant le point de consigne de vitesse filtré. Par la maitrise de l'intensité des variations de vitesse, permise par la filtration de la consigne de vitesse, on observe une réduction de contraintes physiques et des organes mécaniques de la machine 1.

Dans des modes de réalisation, la machine 1 de traitement de produits 2 est contrôlable de manière analogique. En d'autres termes le point de consigne de vitesse Vc est transmis via un signal analogique à la machine 1 de traitement qui va appliquer ladite consigne de vitesse Vc de manière instantanée. Cela permet une modification possible en continu et en temps réelle de la vitesse de traitement de ladite machine 1.

Dans certains cas, le pourcentage de remplissage du dispositif d'accumulation peut être obtenu par exemple par calcul, par comptage, par mesure, notamment à partir de capteurs tels que des capteurs lasers, des cellules photoélectriques, des moyens de comptage ou encore des capteurs de position. Selon une caractéristique additionnelle possible, le procédé comprend la mesure en continu du pourcentage de remplissage R du dispositif d'accumulation 3 à partir d'un capteur laser.

La méthode peut également permettre la prédiction des besoins de maintenance et la surveillance de l'efficacité de la ligne basées sur les points de consigne de vitesse Vc appliqués.

Dans des modes de réalisation, le procédé de contrôle comprend également une étape de prédiction d'un besoin de maintenance basé sur le point de consigne de vitesse Vc appliqué. En effet, lorsque le point de consigne de vitesse Vc est égal à la vitesse de traitement minimale de la machine 1 de traitement de produits 2, et que le dispositif d'accumulation 3 amont se vide progressivement, ou à l'inverse que le dispositif d'accumulation 3 aval se remplit jusqu'à saturation, cela peut impliquer un défaut situé en amont ou en aval sur la ligne 100 de conditionnement. Le procédé peut prévoir un signal, de tout type, sonore ou de type message, à l'attention de l'opérateur pour une surveillance de la ligne 100 plus approfondie. Ce signal peut être programmé pour être émis par exemple dès lors que le point de consigne de vitesse Vc est égal à la vitesse de traitement minimale de la machine 1 de traitement de produits 2 afin d'anticiper tout problème de long terme, causant des dommages en termes de production sur la ligne 100 de conditionnement de produits 2.

Ce signal peut être paramétré par l'opérateur de la ligne 100 pour être émis de manière à répondre aux besoins de ladite ligne 100. L'opérateur élabore des scénarii, par exemple encore il est envisageable de paramétrer un signal d'alerte lorsque le point de consigne de vitesse Vc correspond à la vitesse minimale de la machine 1 de traitement de produits 2 depuis une durée déterminée par l'opérateur.

Selon une caractéristique additionnelle possible, le procédé de contrôle comprend également une surveillance de l'efficacité de la ligne 100, basée sur le point de consigne de vitesse Vc appliqué. En effet et de manière générale, le point de consigne de vitesse Vc ne devrait pas subir de grandes variations. Lorsque la ligne 100 est opérationnelle et que l'ensemble des machines 1 de traitement de produits 2 fonctionnent sans défaut, le point de consigne de vitesse Vc d'une machine 1 de traitement devrait se situer dans une plage de variations minimales. Or, si un opérateur constate de grandes variations en continu, ou un fonctionnement à un point de consigne de vitesse Vc extrême, c'est-à-dire correspondant à une vitesse minimale ou maximale, cela va impacter l'efficacité globale de la ligne 100. Néanmoins, grâce au procédé de contrôle de l'invention, l'efficacité sera maintenue autant que possible et le plus longtemps possible, en dépit des défauts et problèmes pouvant survenir sur la ligne 100 de conditionnement de produits 2.

Le procédé selon l'invention peut être implémenté sous forme de programme informatique, stockée sur un support lisible par ordinateur, ou intégré directement dans le matériel d'une machine de traitement de produits.

L'invention concerne donc également un programme informatique comprenant des instructions qui, lorsqu'elles sont exécutées par un ordinateur, amène ledit ordinateur à exécuter le procédé de contrôle tel que décrit précédemment.

L'invention concerne en outre un support lisible par ordinateur comprenant des instructions qui, lorsqu'elles sont exécutées par un ordinateur, amènent ledit ordinateur à exécuter le procédé tel que décrit précédemment.

Enfin, l'invention concerne une machine 1 de traitement de produits 2 comprenant un processeur et une mémoire, dans laquelle la mémoire comprend des instructions stockées sur celle-ci qui, lorsqu'elles sont exécutées par le processeur, amènent ladite machine 1 à exécuter le procédé de contrôle. Il est également envisageable de prévoir une unité de contrôle sous la forme une interface homme machine pour l'ensemble de la ligne 100, permettant à l'opérateur de paramétrer les vitesses minimales et maximales de chaque machine 1 de traitement de produits 2 de la ligne, et de paramétrer éventuellement l'émission d'un signal d'alerte en cas de besoin de maintenance. Par exemple, l'unité de contrôle est configurée pour contrôler l'écran d'affichage afin qu'il affiche un message et/ou une image et/ou des signaux visuels en général afin de signaler à un opérateur qu'il existe un besoin de maintenance sur la ligne 100.

Dans des modes de réalisation, l'unité de contrôle, comprend:
- une base de données dans laquelle sont renseignées les vitesses minimale et maximale de traitement de produits 2 pour chaque machine 1 de la ligne 100, ladite base de données étant enregistrée dans un dispositif mémoire ou stockée sur un serveur indépendant,
- un processeur relié à la mémoire pour appliquer les instructions déterminées par le procédé de contrôle, en particulier le point de consigne de vitesse Vc et
- une interface de communication reliée au processeur pour la communication chaque machine 1 de traitement de produits 2.

Selon une variante possible, l'unité de contrôle comprend une unité de calcul permettant de générer des instructions concernant le point de consigne de vitesse Vc pour une machine 1 de traitement de produits 2 en temps réel en fonction de la valeur Re du pourcentage de remplissage R du dispositif d'accumulation 3 amont à ladite machine 1.

Cette approche de contrôle de vitesse peut être mise en œuvre dans divers types de machines de traitement de produits, y compris mais sans s'y limiter, les étiqueteuses. Dans le cadre de l'invention, la machine 1 de traitement de produits 2 peut donc être de tout type et est par exemple une étiqueteuse.

L'invention permet d'optimiser le fonctionnement d'une ligne 100 de conditionnement de produits 2 en permettant une flexibilité dans la vitesse de traitement desdits produits 2, sans risque pour le fonctionnement des machines 1. L'invention permet également d'optimiser la durée d'utilisation des machines 1 en réduisant les interventions liées à la maintenance due à des arrêts intempestifs.

## Revendications

1. Procédé de contrôle en continu et en temps réel de la vitesse d'une machine (1) de traitement de produits (2) le long d'une ligne de conditionnement (100), ladite ligne (100) comprenant au moins un dispositif d'accumulation (3);
le procédé comprenant au moins les étapes suivantes :
- la réception d'une valeur d'entrée (Re) indiquant un pourcentage de remplissage (R) en produits (2) dudit dispositif d'accumulation (3) ;
- le calcul continu d'un point de consigne de vitesse (Vc) pour la machine (1) de traitement desdits produits (2) entre une vitesse basse (Vb) et une vitesse haute (Vh) de traitement de ladite machine (1) de traitement, ledit point de consigne (Vc) étant basé sur le pourcentage de remplissage (R);
- le filtrage du point de consigne de vitesse (Vc) pour réduire les amplitudes de variations de vitesse ; et
- l'application du point de consigne de vitesse (Vc) filtré pour contrôler la vitesse de la machine (1) de traitement.

2. Procédé de contrôle en continu et en temps réel de la vitesse d'une machine (1) de traitement de produits (2) le long d'une ligne de conditionnement (100) selon la revendication précédente, **caractérisé en ce que** le dispositif d'accumulation (3) est situé en amont et approvisionne en produits (2) ladite machine (1) de traitement située en aval.

3. Procédé de contrôle selon la revendication précédente, comprenant en outre le prolongement du fonctionnement de la machine de traitement (1) de produits (2) à la vitesse basse (Vb) jusqu'à ce qu'aucun produit (2) ne soit présent sur ledit dispositif d'accumulation (3) amont.

4. Procédé de contrôle en continu et en temps réel de la vitesse d'une machine (1) de traitement de produits (2) le long d'une ligne de conditionnement (100) selon la revendication 1, **caractérisé en ce que** la ligne de conditionnement (100) comprend au moins deux machines (1) de traitement de produits (2) et **en ce que** le dispositif d'accumulation (3) est situé en aval de la première machine (1) de traitement et approvisionne en produits (2) une deuxième machine (1) de traitement située en aval dudit dispositif d'accumulation (3), ledit procédé de contrôle s'appliquant à ladite première machine (1) de traitement.

5. Procédé de contrôle selon l'une quelconque des revendications 1 à 4, **caractérisé en ce que** la ligne de conditionnement (100) comprend au moins deux machines (1) de traitement de produits (2) et **en ce que** le point de consigne de vitesse (Vc) pour une première machine (1) de traitement est calculé indépendamment de la vitesse d'une deuxième machine de traitement (1) en amont ou en aval de ladite première machine (1) le long de la ligne de conditionnement (100).

6. Procédé de contrôle selon l'une quelconque des revendications précédentes, **caractérisé en ce que** la ligne de conditionnement (100) comprend au moins deux machines (1) de traitement de produits (2) et ce qu'il comprend la synchronisation du fonctionnement desdites au moins deux machines de traitement (1) de produits (2) en utilisant le même point de consigne de vitesse (Vc) calculé pour une seule machine (1) de traitement, de préférence calculé pour la machine (1) de traitement aval au dispositif d'accumulation (3).

7. Procédé de contrôle selon l'une quelconque des revendications précédentes, comprenant en outre la réduction du stress mécanique sur la machine (1) de traitement de produits (2) en appliquant le point de consigne de vitesse (Vc) filtré.

8. Procédé de contrôle selon l'une quelconque des revendications précédentes, dans laquelle la vitesse de la machine (1) de traitement de produits (2) est contrôlable de manière analogique.

9. Procédé de contrôle selon l'une quelconque des revendications précédentes, comprenant en outre la mesure en continu du pourcentage de remplissage (R) du dispositif d'accumulation (3) à partir d'un capteur laser.

10. Procédé de contrôle selon l'une quelconque des revendications précédentes, comprenant en outre la prédiction d'un besoin de maintenance basé sur le point de consigne de vitesse (Vc) appliqué sur la machine (1) de traitement.

11. Procédé de contrôle selon l'une quelconque des revendications précédentes, comprenant en outre la surveillance de l'efficacité de la ligne (100) basée sur le point de consigne de vitesse (Vc) appliqué sur la machine (1) de traitement.

12. Un programme informatique comprenant des instructions qui, lorsqu'elles sont exécutées par un ordinateur, amènent ledit ordinateur à exécuter le procédé selon l'une quelconque des revendications 1 à 11.

13. Un support lisible par ordinateur comprenant des instructions qui, lorsqu'elles sont exécutées par un ordinateur, amènent ledit ordinateur à exécuter le procédé selon l'une quelconque des revendications 1 à 11.

14. Une machine (1) de traitement de produits (2) comprenant un processeur et une mémoire, dans laquelle la mémoire comprend des instructions stockées sur celle-ci qui, lorsqu'elles sont exécutées par le processeur, amènent ladite machine (1) à exécuter le procédé de contrôle selon l'une quelconque des revendications 1 à 11.

15. La machine (1) de traitement de produits (2) selon la revendication précédente, dans laquelle ladite machine (1) est une étiqueteuse.
